# EUROPEAN PATENT APPLICATION

(11) **EP 4 629 419 A1**
(43) Date of publication of application: **08.10.2025**
(21) Application number: 24211934.5
(22) Date of filing: 08.11.2024
(51) Int. Cl.: H01M 50/213, H01M 50/30, H01M 50/287, H01M 50/507, H01M 50/289, H01M 50/291, H01M 50/293, H01M 50/284, H01M 10/42, H01M 10/658, H01M 50/296, H01M 50/271, H01M 50/183

(54) **BATTERY MODULE**

(30) Priority: 03.04.2024 CN 202420687540 U; 18.06.2024 WO PCT/CN2024/099854
(71) Applicant: Eve Energy Co., Ltd., Huizhou, Guangdong 516006 (CN)
(72) Inventor: LIN, Zheng, Huizhou, 516006 (CN); LIANG, Xianyu, Huizhou, 516006 (CN)
(74) Representative: HGF

(57) **Abstract**

A battery module is provided. The battery module includes a box (1), a battery cell assembly (2), an upper cover (3) and a battery management system, BMS, board (4). The battery cell assembly (2) is arranged in the box (1), the BMS board (4) is mounted on the upper cover (3), the box (1) is provided with an opening, and the upper cover (3) is arranged to cover the opening. The battery cell assembly (2) includes a bracket (21) and a battery cell (22) arranged in the bracket (21), the BMS board (4) is located on the bracket (21) and is electrically connected to the battery cell (22). The battery module further includes a protective member (8) connected into the upper cover (3). The battery cell (22) is ejected toward an outer side face of the protective member (8), the protective member (8) is arranged around an outer side of the BMS board (4) and arranged to abut against the bracket (21) to separate the BMS board (4) and the battery cell (22).

## Description

### TECHNICAL FIELD

The present application relates to the field of battery protection technology, and in particular, a battery module.

### BACKGROUND

In a cylindrical battery module, to avoid the thermal interaction between cylindrical battery cells and the battery management system (BMS) board, two separated cavities are usually provided in the box of the cylindrical battery module to place the cylindrical battery cells and the BMS board in two different cavities respectively so that physical separation between the cylindrical battery cells and the BMS board can be achieved. The BMS board refers to a circuit board for monitoring and protecting the cylindrical battery cells.

However, due to the separation manner of the above two cavities, a larger box volume is required, which makes the entire cylindrical battery module occupy a larger area and leads to poor compactness of the structure inside the box.

### SUMMARY

A battery module is provided according to the present application, which can improve safety when the battery cell is in thermal runaway, and can also ensure that the battery module occupies a small area and has a high compact structure.

In a first aspect, a battery module is provided according to embodiments of the present application, which includes a box, a battery cell assembly, an upper cover and a BMS board. The battery cell assembly is arranged in the box, the BMS board is mounted in the upper cover, the box is provided with an opening, and the upper cover is arranged to cover the opening. The battery cell assembly includes a bracket and a battery cell arranged in the bracket. The BMS board is located on the bracket and electrically connected to the battery cell, and the battery module further includes a protective member.

The protective member is connected into the upper cover, the battery cell is arranged to eject toward a direction of an outer side face of the protective member, the protective member is arranged around an outer side of the BMS board and arranged to abut against the bracket to separate the BMS board and the battery cell.

The BMS board is mounted in the upper cover and located on the bracket of the battery cell assembly, the battery cell can be ejected toward the outer side face of the protective member, and then the protective member is arranged in the upper cover so that the protective member is arranged around the outer side of the BMS board and abuts against the bracket. In this manner, the BMS board and the battery cell can be completely separated by the protective member and the bracket. When the battery cell has thermal runaway and generates high-temperature and high-pressure gas, the generated gas is prevented from being injected to the BMS board due to the isolation effect of the bracket and the protective member, to ensure that the BMS board is not damaged, so that the BMS board can timely report the thermal runaway alarm signal, to buy a certain amount of time for escape, and thus improving the safety during thermal runaway. Moreover, the heat generated by the BMS board during operation is isolated to prevent the battery cell from being heated to better protect the battery cell, thereby improving the service life of the battery cell; the protective member is set between the bracket of the battery cell assembly and the upper cover, which does not require a larger box compared with directly setting two separated cavities in the box so that the structure of the entire box occupies a smaller area and has a high compactness.

### BRIEF DESCRIPTION OF THE DRAWINGS

FIG. 1 is a schematic structural diagram of a battery module according to the present application;
FIG. 2 is an exploded view illustrating the structure of the battery module according to the present application;
FIG. 3 is a schematic structural diagram of the assembly of a protective member and a bracket according to the present application;
FIG. 4 is a schematic structural diagram from a viewing angle before an upper cover and a protective member are assembled according to the present application; and
FIG. 5 is a schematic structural diagram from another viewing angle before the upper cover and the protective member are assembled according to the present application.

### LIST OF REFERENCE NUMBERS

| | |
|---|---|
| 1 | box |
| 2 | cell assembly |
| 21 | bracket |
| 22 | battery cell |
| 221 | ejection end |
| 3 | upper cover |
| 31 | mounting block |
| 4 | BMS board |
| 5 | pole |
| 6 | busbar |
| 7 | explosion-proof valve |
| 8 | protective member |
| 81 | U-shaped plate |
| 82 | notch plate |
| 821 | avoidance notch |

### DETAILED DESCRIPTION

In this embodiment, a battery module is proposed, which can improve the safety in thermal runaway while ensuring that the entire battery module has a high compact structure and occupies a small area. In this embodiment, the battery module is a cylindrical battery module with 12 V.

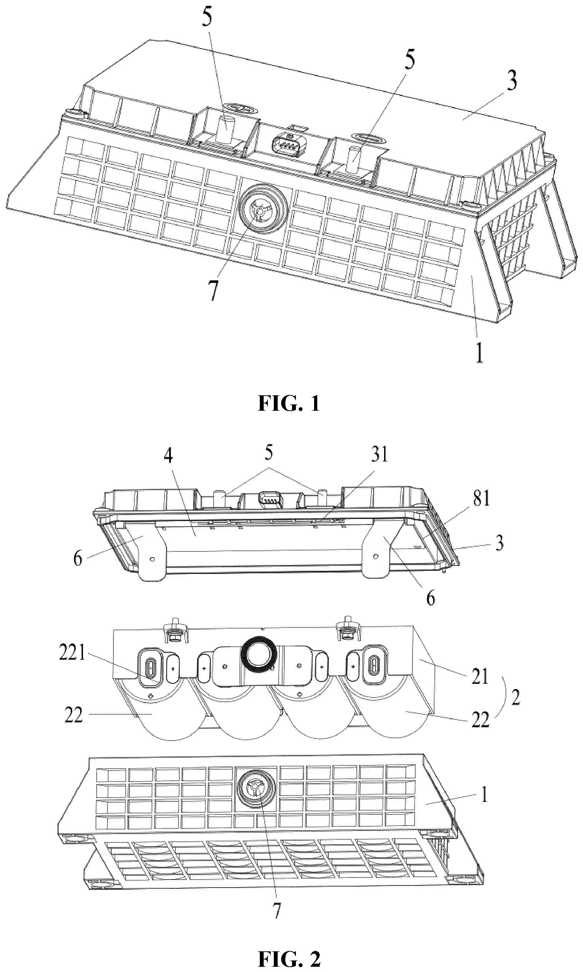

As shown in FIG. 1 and FIG. 2, the battery module includes a box 1, a battery cell assembly 2, an upper cover 3 and a BMS board 4. The battery cell assembly 2 is arranged in the box 1, and the BMS board 4 is mounted in the upper cover 3. The box 1 is provided with an opening, and the upper cover 3 is arranged to cover the opening so that the battery cell assembly 2 and the BMS board 4 can be encapsulated in the box 1. The battery cell assembly 2 includes a bracket 21 and a battery cell 22 arranged in the bracket 21, the BMS board 4 is horizontally placed on the bracket 21, and the BMS board 4 is electrically connected to the battery cell 22. The BMS board 4 and the battery cell 22 in this embodiment are both common structures in the existing battery modules, and their working principles are not described here. The BMS board 4 is connected into the upper cover 3 by a fastener. In this embodiment, the fastener may be a bolt.

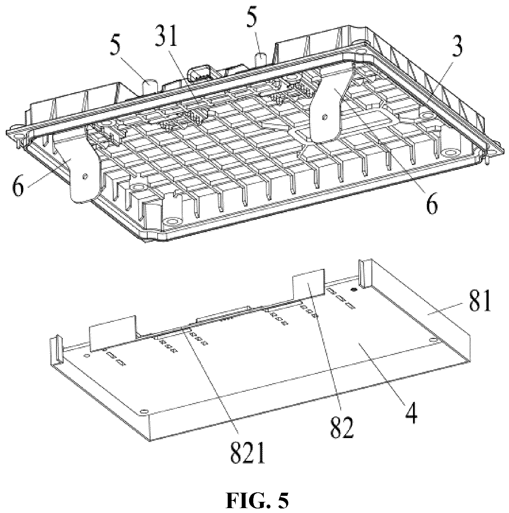

As shown in FIG. 2 to FIG. 5, the battery module further includes a protective member 8, the battery cell 22 is ejected toward the direction of an outer side face of the protective member 8, the protective member 8 is connected into the upper cover 3 and is arranged around an outer side of the BMS board 4, and the protective member 8 abuts against the bracket 21 so that the BMS board 4 and the battery cell 22 can be separated by the bracket 21 and the upper cover 3 abutting against each other. In this embodiment, the battery cell 22 is cylindrical, and the cylindrical battery cell is horizontally placed in the box 1.

Compared with the related art, the battery module in this embodiment changes the physical separation structure between the BMS board 4 and the battery cell 22. The BMS board 4 is mounted in the upper cover 3 and horizontally located on the bracket 21 of the battery cell assembly 2, then the protective member 8 is arranged in the upper cover 3, and the battery cell 22 can be ejected toward the outer side face of the protective member 8. The protective member 8 is arranged around the outer side of the BMS board 4 and abuts against the bracket 21. Thereby, the BMS board 4 and the battery cell 22 can be completely separated by the protective member 8 and the bracket 21. When the battery cell 22 has thermal runaway and generates high-temperature and high-pressure gas, the generated gas is prevented from being injected to the BMS board 4 due to the isolation effect of the bracket 21 and the protective member 8, to ensure that the BMS board 4 is not damaged, so that the BMS board 4 can timely report the thermal runaway alarm signal, to buy a certain amount of time for escape, and thus improving the safety during thermal runaway. Moreover, the heat generated by the BMS board 4 during operation is isolated to prevent the battery cell 22 from being heated, to better protect the battery cell 22, thereby improving the service life of the battery cell 22. The protective member 8 is set between the bracket 21 of the battery cell assembly 2 and the upper cover 3, which does not require a larger box 1 compared with directly setting two separated cavities in the box 1, so that the structure of the entire box 1 occupies a smaller area and has a high compactness.

The protective member 8 and the upper cover 3 are an integrally formed structure, that is, the protective member 8 and the upper cover 3 are integrally formed by injection molding, which, in one aspect, makes the processing be simple and convenient, without assembling the protective member 8 and the upper cover 3 additionally, which saves time and effort; in another aspect, can ensure the sealing between the protective member 8 and the upper cover 3 to prevent the heat generated by the BMS board 4 in operation and the high-temperature and high-pressure gas generated by the thermal runaway of the battery cell 22 from flowing out or flowing in through the gap between the upper cover 3 and the protective member 8, and can ensure the separation effect between the BMS board 4 and the battery cell 22. In other embodiments, the upper cover 3 and the protective member 8 may also be separated structures, which is not limited here.

It is worth noting that since the upper cover 3 is generally made of plastic material, correspondingly, the protective member 8 integrally formed with the upper cover 3 is also made of plastic material. When heat or high-temperature and high-pressure gas flows to the protective member 8, it is easy to melt the protective member 8 quickly in a short time and then cause damage to the BMS board 4, resulting in the BMS board 4 inside the protective member 8 failing to report the thermal runaway alarm signal in time.

In this embodiment, the upper cover 3 and the protective member 8 are integrally injection molded with polyamide-66 (PA66) plus 30% glass fiber (GF) so that the melting point of the upper cover 3 and the protective member 8 is relatively high, and the melting point range is from 200°C to 220°C, thereby prolonging the time from the occurrence of thermal runaway to the melting of the protective member 8 (10s to 12s). As a result, the protective member 8 may not melt until a longer period of time passed, which can provide time for the BMS board inside the protective member 8 to report a thermal runaway alarm signal. The full name of PA66 is polyamide 66 or nylon 66, which is a thermoplastic resin material. GF is the abbreviation of glass fiber, which is an inorganic non-metallic material with excellent performance.

As shown in FIG. 2, multiple battery cells 22 are arranged at intervals in the bracket 21, and arc-shaped grooves are provided in the box 1 to accommodate the battery cells 22, that is, upper and lower ends of the battery cells 22 are respectively mounted in the bracket 21 and the arc-shaped grooves to ensure the mounting stability and reliability of the battery cells 22 in the box 1. In this embodiment, four battery cells 22 are arranged in the box 1.

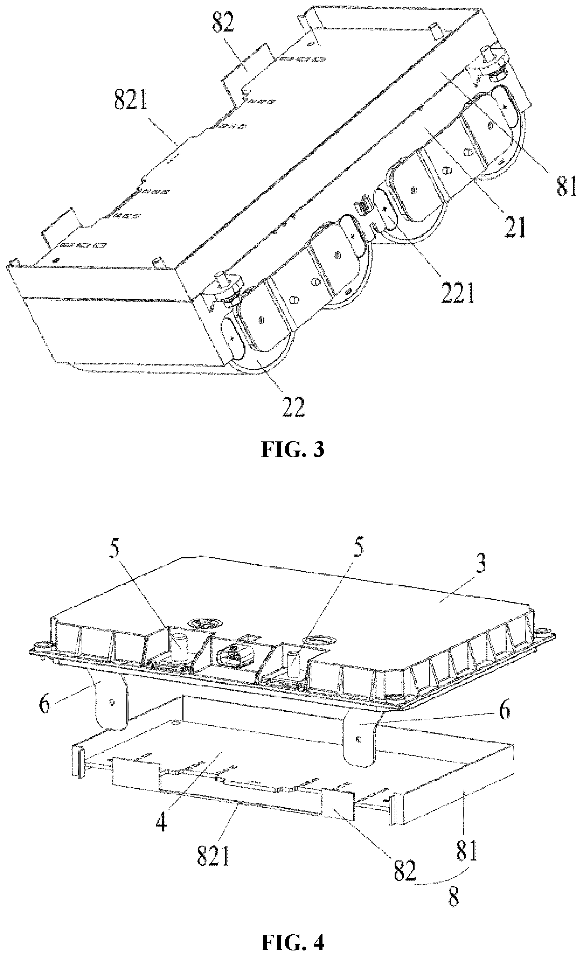

To save the space in the box 1 and make the whole battery module more compact, as shown in FIG. 2 and FIG. 3, the protective member 8 is directly against the bracket 21, that is, the outer side face of the protective member 8 is flush with an outer side face of the bracket 21, the battery cell 22 is perpendicular to the outer side face of the bracket 21, and the outer side face of the bracket 21 is provided with a notch for exposing an ejection end 221 of the battery cell 22, that is, the explosion-proof structure of the battery cell 22 is arranged corresponding to the notch, so that the ejection end 221 of the battery cell 22 ejects outwardly towards the outer side face of the protective member 8, thus ensuring that the protective member 8 can block the high-temperature and high-pressure gas ejected from the ejection end 221 of the battery cell 22.

As shown in FIG. 2 to FIG. 5, the protective member 8 includes a U-shaped plate 81 and a notch plate 82. The notch plate 82 is located on the opening side of the U-shaped plate 81. The U-shaped plate 81 and the notch plate 82 are directly against the bracket 21 so that the BMS board 4 can be arranged at the inner side of the protective member 8 through the enclosure of the U-shaped plate 81 and the notch plate 82, thereby separating the battery cell 22 and the BMS board 4. An outer side face of the U-shaped plate 81 is flush with the outer side face of the bracket 21.

It is worth noting that, compared with making the outer side face of the U-shaped plate 81 protrude outward from the outer side face of the bracket 21, making the outer side face of the U-shaped plate 81 flush with the outer side face of the bracket 21 can ensure that the ejection end 221 of the battery cell 22 ejects outwardly towards the outer side face of the U-shaped plate 81, thereby increasing the path of the gas ejected from the ejection end 221 to the U-shaped plate 81, and thus providing more time for the protective member 8 to protect the BMS board 4 to buy more time for escape.

As shown in FIG. 3 to FIG. 5, the notch plate 82 is provided with an avoidance notch 821 to provide an avoidance space for a mounting block 31 of the upper cover 3, that is, the mounting block 31 is located at the avoidance notch 821 to avoid interference between the mounting block 31 and the notch plate 82. The mounting block 31 is configured to mount a pole 5, one end of the pole 5 is electrically connected to the BMS board 4, and the other end of the pole 5 extends out of the top of the upper cover 3.

As shown in FIG. 1 to FIG. 3, the box 1 is provided with an explosion-proof valve 7 to discharge the high-temperature and high-pressure gas generated by the thermal runaway of the battery cell 22 to the outside of the box 1 through the explosion-proof valve 7, ensuring the safety of thermal runaway; and the explosion-proof valve 7, the notch plate 82 and the ejection end 221 of the battery cell 22 are located on the same side of the box 1.

By arranging the explosion-proof valve 7, the notch plate 82 and the ejection end 221 of the battery cell 22 on the same side of the box 1, when gas generated from the thermal runaway is ejected through the ejection end 221 of the battery cell 22, a large amount of the gas is directly ejected from the explosion-proof valve 7, preventing a large amount of the gas from being ejected from the avoidance notch 821 of the notch plate 82 to the BMS board 4, thereby ensuring the isolation and protection effect of the notch plate 82 on the BMS board.

It is worth noting that, as shown in FIG. 3, the U-shaped plate 81 is arranged at the other ejection end 221 of the battery cell 22 so that the gas ejected from the ejection end 221 can be isolated by the U-shaped plate 81, thereby ensuring the protection effect on the BMS board 4.

The connection between the pole 5 and the BMS board 4 is sealed by a sealant to avoid a gap between the pole 5 and the BMS board 4; the connection between the upper cover 3 and the box 1 is sealed by a sealant, and a connecting wire connected to the BMS board 4 passes through the bracket 21 in a sealed manner, that is, a sealant is provided between the connecting wire and the bracket 21, so that the entire battery module can be connected in a sealed manner to avoid the heat generated by the BMS board 4 and the high-temperature and high-pressure gas generated by the battery cell 22 in the thermal runaway from running around; thus, better protecting the BMS board 4 and the battery cell 22.

As shown in FIG. 2, the battery module further includes a busbar 6, one end of the busbar 6 is electrically connected to the BMS board 4, and the other end of the busbar 6 is electrically connected to the battery cell 22, that is, the current of the battery cell 22 is conducted through the busbar 6, the BMS board 4 and the pole 5 sequentially to the outside of the battery module for use.

Through the action of the protective member 8 and the bracket 21, in one aspect, the battery module in this embodiment can isolate the thermal runaway gas of the battery cell 22 from the BMS board 4 to ensure that the BMS board 4 is not damaged and is enabled to report the thermal runaway alarm signal in time to win time for escape; and in another aspect, the battery module can isolate the heat generated by the BMS board 4 in operation to prevent the battery cell 22 from being heated, thereby improving the service life and performance of the battery cell 22.

## Claims

1. A battery module, comprising a box (1), a battery cell assembly (2), an upper cover (3) and a battery management system, BMS, board (4), wherein the battery cell assembly (2) is arranged in the box (1), the BMS board (4) is mounted in the upper cover (3), the box (1) is provided with an opening, and the upper cover (3) is configured to cover the opening; the battery cell assembly (2) comprises a bracket (21) and a battery cell (22) arranged in the bracket (21), the BMS board (4) is located on the bracket (21) and is electrically connected to the battery cell (22), and the battery module further comprises a protective member (8) connected into the upper cover (3);
wherein the battery cell (22) is arranged to eject toward a direction of an outer side face of the protective member (8), the protective member (8) is arranged around an outer side of the BMS board (4) and arranged to abut against the bracket (21) to separate the BMS board (4) and the battery cell (22).

2. The battery module according to claim 1, wherein the protective member (8) and the upper cover (3) are an integrally formed structure.

3. The battery module according to claim 2, wherein a melting point of the protective member (8) is in a range from 200°C to 220°C.

4. The battery module according to any one of claims 1 to 3, wherein the outer side face of the protective member (8) is flush with an outer side face of the bracket (21), and the outer side face of the bracket (21) is provided with a notch to expose an ejection end (221) of the battery cell (22), and the ejection end (221) is used as an explosion-proof structure of the battery cell (22) and is arranged to correspond to the notch.

5. The battery module according to any one of claims 1 to 3, wherein the protective member (8) comprises:
a U-shaped plate (81) and a notch plate (82), wherein the notch plate (82) is located at an opening side of the U-shaped plate (81), and the notch plate (82) is provided with an avoidance notch (821), and both the U-shaped plate (81) and the notch plate (82) abut against the bracket (21).

6. The battery module according to claim 5, wherein the box (1) is provided with an explosion-proof valve (7), and the explosion-proof valve (7), the notch plate (82) and the ejection end (221) of the battery cell (22) are located on a same side of the box (1).

7. The battery module according to claim 5, wherein the upper cover (3) is further provided with a mounting block (31), and the mounting block (31) is configured to mount a pole (5), the pole (5) is electrically connected to the BMS board (4), and the mounting block (31) is located at the avoidance notch (821).

8. The battery module according to claim 7, wherein the pole (5) is connected to the BMS board (4) in a sealed manner.

9. The battery module according to any one of claims 1 to 3, wherein the upper cover (3) is connected to the box (1) in a sealed manner, and a connecting wire connected to the BMS board (4) passes through the bracket (21) in a sealed manner.

10. The battery module according to any one of claims 1 to 3, further comprising:
a busbar (6), wherein one end of the busbar (6) is electrically connected to the BMS board (4), and the other end of the busbar (6) is electrically connected to the battery cell (22).
